# DEMANDE DE BREVET EUROPEEN

(11) **EP 3 343 014 A1**
(43) Date de publication de la demande: **04.07.2018**
(21) Numéro de dépôt: 17208984.9
(22) Date de dépôt: 20.12.2017
(51) Int. Cl.: F02M 35/10, F02D 41/04, F02D 41/14, F02D 41/22, F02B 77/08, F02D 17/04, F02D 41/00, G01M 15/04, F02D 9/02

(54) **SYSTÈME DE FERMETURE POUR CIRCUIT D'ADMISSION DE GAZ INTÉGRANT UNE UNITÉ DE DÉTECTION DE GAZ ET DE VAPEUR INFLAMMABLE**

(30) Priorité: 03.01.2017 FR 1750022
(71) Demandeur: Centrexpert SAS, 69320 Feyzin (FR)
(72) Inventeur: CONSTANT, Jean-Marie, 69006 Lyon (FR); MAURICE, Thierry, 43620 Saint Romain Lachalm (FR)
(74) Mandataire: Verriest, Philippe

(57) **Abrégé**

Un système de fermeture pour circuit de gaz d'admission comprend un corps de vanne (10) et un élément d'obturation (11) variant entre une configuration d'ouverture et une configuration de fermeture bloquant la circulation de gaz d'admission. Il comprend aussi un actionneur (13) solidaire du corps de vanne (10) et assurant le déplacement de l'élément d'obturation (11) au moins vers l'une des configurations de fermeture et d'ouverture, un dispositif de détection de gaz et de vapeurs inflammables intégré au corps de vanne (10) et doté d'une unité de détection de gaz et de vapeurs (12) mesurant la concentration en au moins un gaz inflammable ou une vapeur inflammable prédéterminés et un module de commande communiquant avec l'unité de détection (12) et avec l'actionneur (13) pour assurer un pilotage de l'actionneur (13) en fonction de la mesure réalisée par l'unité de détection (12). Il est également décrit un procédé de test et un procédé de fonctionnement du système de fermeture.

## Description

La présente invention concerne un système de fermeture pour circuit d'admission de gaz destiné à l'alimentation d'un moteur thermique en gaz d'admission, le système de fermeture comprenant un corps de vanne délimitant un conduit interne permettant au gaz d'admission de circuler entre une entrée et une sortie du corps de vanne, un élément d'obturation agencé le long du conduit interne et variant entre une configuration d'ouverture dans laquelle le gaz d'admission peut s'écouler dans le conduit interne de l'entrée vers la sortie du corps de vanne et une configuration de fermeture bloquant la circulation de gaz d'admission dans le conduit interne.

L'invention porte aussi sur un procédé de test du système de fermeture à mettre en oeuvre avant d'autoriser l'alimentation du moteur thermique en gaz d'admission.

Enfin l'invention concerne un procédé de fonctionnement du système de fermeture.

On connait de tels systèmes de fermeture destinés à bloquer la circulation de gaz d'admission dans un circuit d'admission, et donc à bloquer l'alimentation du moteur thermique en gaz d'admission afin d'arrêter le moteur thermique par manque de gaz d'admission.

De tels systèmes de fermeture sont aussi connus sous le nom de « vanne étouffoir » ou de « clapet étouffoir ».

Les systèmes de fermeture connus comprennent des éléments d'obturation de différentes formes et actionnés par des moyens manuels, électriques ou mécaniques.

Lorsqu'un moteur thermique est susceptible d'être soumis à un risque d'emballement sous l'effet d'une absorption d'un produit hydrocarburé ou combustible via le circuit de gaz d'admission, un tel système de fermeture peut être requis au sein du circuit d'admission. C'est notamment le cas pour les moteurs thermiques de type Diesel car dans de telles situations, ce type de moteur ne s'arrête pas lorsqu'on agit uniquement sur le circuit d'alimentation en carburant.

Notamment, la Directive Européenne 2012/18/UE du 4 juillet 2012 dite directive SEVESO 3 est entrée en vigueur le 1^{er} juin 2015 et concerne pour la plupart les sites industriels ou de stockages de produits inflammables. Son respect peut passer par l'obligation pour les véhicules à moteur thermique désireux de se rendre sur ces sites d'être équipés d'un tel système de fermeture.

Il est certain que le risque d'emballement d'un moteur thermique, notamment de type Diesel, présente une potentialité élevée dans de tels sites ou à proximité, en raison du risque existant d'une alimentation additionnelle et intempestive en produit hydrocarburé ou autre produit combustible sous forme de gaz ou de vapeur inhérent à l'environnement de fonctionnement.

L'actionnement manuel de l'élément d'obturation est par exemple opéré à l'aide d'une liaison mécanique qui comporte une poignée solidarisée à un câble généralement, coulissant dans une gaine et attaché à un levier qui actionne la fermeture de l'élément d'obturation lorsque l'opérateur tire ou pousse la poignée.

Classiquement, l'actionnement mécanique opère principalement selon le principe de la variation de la pression du gaz circulant passant à travers le système de fermeture : la fermeture de l'élément d'obturation est automatique dès que la vitesse des gaz à l'entrée excède une valeur prédéterminée pour laquelle le système de fermeture est calibré.

Enfin, l'actionnement électrique est simplement constitué d'un solénoïde pilotant l'axe d'un élément d'obturation pivotant et actionnée soit directement par un bouton accessible par l'utilisateur, soit par l'intermédiaire d'un relais recevant une information dédiée d'un module de commande.

Le pilotage de ces actionnements est conséquemment également soit manuel par intervention humaine, soit mécanique par différence de pression, soit électrique par gestion électronique ou par contact direct.

Les modes d'actionnement peuvent être combinés, tout comme les modes de pilotage.

Les systèmes de fermeture sont susceptibles d'être défectueux en fonctionnement du fait de leur environnement de travail naturellement sévère. Ils peuvent aussi présenter des dysfonctionnements dus essentiellement à des réglages inappropriés et à des maintenances indigentes, voire absentes. Il peut également s'agir de défaillances de l'actionneur ou du pilotage de l'élément d'obturation.

Ces dysfonctionnements peuvent se présenter sous la forme de fermetures intempestives et inappropriées de l'élément d'obturation. Ceci est très problématique et peu même conduire certains utilisateurs à volontairement bloquer l'élément d'obturation de sorte à empêcher toute fermeture. Or, ces pratiques sont généralement indécelables et la plupart des sites n'obligent à se livrer à aucun test de fonctionnement du système de fermeture avant l'accès au site.

Or, ces dysfonctionnements peuvent avoir des conséquences très graves tant pour le moteur thermique, sa suralimentation et son électronique embarquée que pour l'environnement de travail et la sécurité des personnes. Il convient normalement de vérifier régulièrement le bon fonctionnement de l'élément d'obturation, selon les instructions du fabriquant du système de fermeture. Mais malheureusement il est constaté qu'en pratique, ces vérifications sont rarement effectuées, et d'autant plus rarement que le fonctionnement du système de fermeture est très rarement sollicité.

La présente invention vise à résoudre tout ou partie des inconvénients listés ci-dessus.

Notamment, un objet de l'invention est de fournir une solution simple, efficace, fiable et sécuritaire, qui fonctionne automatiquement et qui supprime les risques liés au facteur humain.

En effet, l'invention propose d'intégrer dans le corps de vanne une unité de détection de gaz ou de vapeur inflammable configurée pour surveiller la teneur en au moins un gaz inflammable prédéterminé ou une vapeur inflammable prédéterminée et de piloter automatiquement la fermeture de l'élément d'obturation à partir et en fonction des mesures réalisées par l'unité de détection.

A cet effet, le système de fermeture pour circuit d'admission de gaz destiné à l'alimentation d'un moteur thermique en gaz d'admission comprend un corps de vanne délimitant un conduit interne permettant au gaz d'admission de circuler entre une entrée et une sortie du corps de vanne, un élément d'obturation agencé le long du conduit interne et variant entre une configuration d'ouverture dans laquelle le gaz d'admission peut s'écouler dans le conduit interne de l'entrée vers la sortie du corps de vanne et une configuration de fermeture bloquant la circulation de gaz d'admission dans le conduit interne, le système de fermeture comprenant en outre :
- un actionneur solidaire du corps de vanne et assurant le déplacement de l'élément d'obturation au moins vers l'une des configurations de fermeture et d'ouverture,
- un dispositif de détection de gaz et de vapeurs inflammables intégré au corps de vanne et doté d'une unité de détection de gaz et de vapeurs mesurant la concentration en au moins un gaz inflammable ou une vapeur inflammable prédéterminés dans le conduit interne,
- et un module de commande communiquant avec l'unité de détection et avec l'actionneur pour assurer un pilotage de l'actionneur en fonction de la mesure réalisée par l'unité de détection.

La nature et la conception de l'élément d'obturation et de l'actionneur ne sont aucun cas limitatives et peuvent au contraire être quelconques dès lors que la fonction générale de ces éléments est remplie.

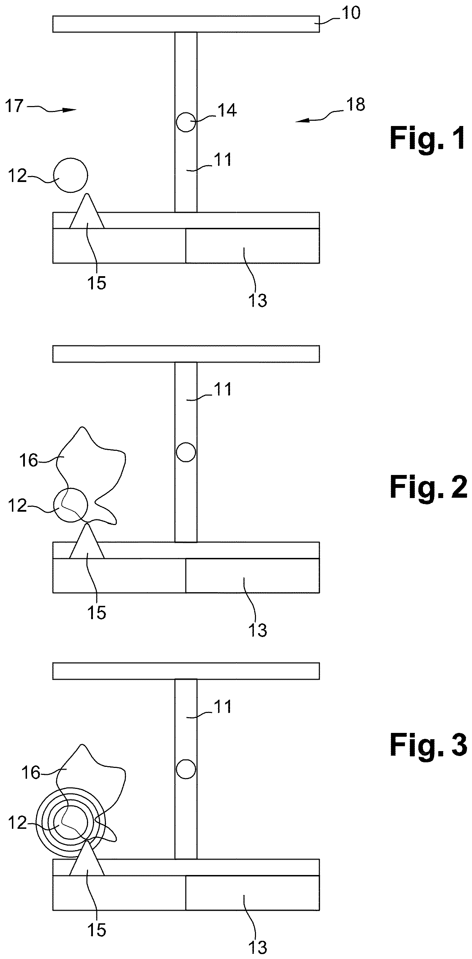

Dans un premier exemple correspondant à l'exemple des Figures 1 à 12, le système de fermeture est configuré de sorte que l'élément d'obturation occupe naturellement la configuration de fermeture lorsque l'actionneur n'est pas sollicité. Autrement dit, dans ce premier exemple, la configuration d'ouverture est occupée par l'élément d'obturation uniquement lorsque l'actionneur est sollicité. Le système de fermeture peut comprendre des éléments de rappel pour placer automatiquement l'élément d'obturation dans la configuration de fermeture dès que l'actionneur n'est plus sollicité.

Dans un deuxième exemple non représenté, le système de fermeture est configuré de sorte que l'élément d'obturation occupe naturellement la configuration d'ouverture lorsque l'actionneur n'est pas sollicité. Autrement dit, dans ce deuxième exemple, la configuration de fermeture est occupée par l'élément d'obturation uniquement lorsque l'actionneur est sollicité. Le système de fermeture peut comprendre des éléments de rappel pour placer automatiquement l'élément d'obturation dans la configuration d'ouverture dès que l'actionneur n'est plus sollicité.

Enfin dans un troisième exemple non représenté, il est nécessaire de solliciter l'actionneur dans un premier mode de fonctionnement pour placer l'élément d'obturation dans la configuration de fermeture et de solliciter l'actionneur dans un deuxième mode de fonctionnement pour placer l'élément d'obturation dans la configuration d'ouverture.

L'invention sera encore mieux comprise à l'aide de la description qui suit d'autres modes particuliers de réalisation de l'invention donnés à titre d'exemples non limitatifs et représentés sur les dessins annexés, dans lesquels les Figures 1 à 12 montrent un exemple de système de fermeture selon l'invention dans différentes phases d'un procédé de fonctionnement envisageable.

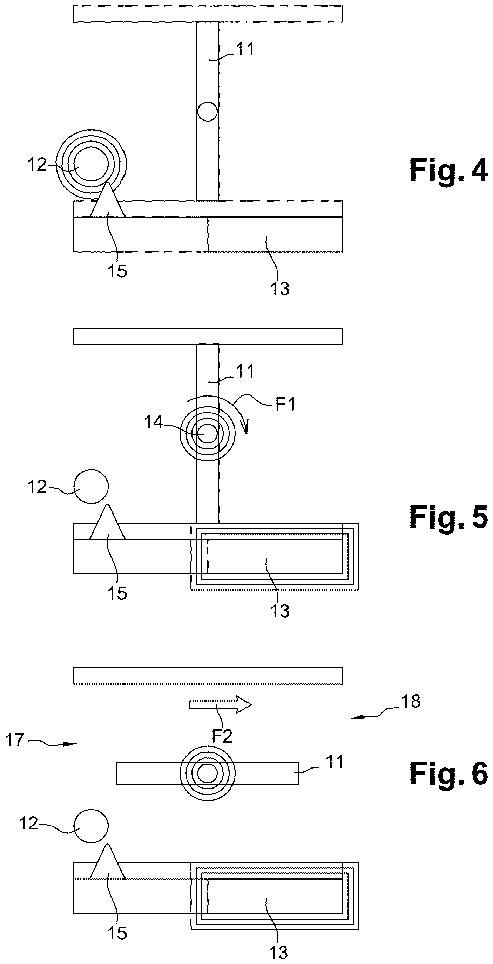

Sur les Figures 1 à 12, le corps de vanne est repéré 10, l'élément d'obturation est repéré 11 et se présente sous la forme d'un volet apte à pivoter autour d'un axe de pivotement 14 pour varier entre la configuration de fermeture (visible sur les Figures 1 à 5, 10 et 11) dans laquelle il obture le conduit interne et la configuration d'ouverture (représentée sur les Figures 6 à 9 et 12) dans laquelle il ouvre le conduit interne, l'unité de détection de gaz et de vapeur est repérée 12 et l'actionneur qui sert à faire pivoter l'élément d'obturation 11 vers la configuration d'ouverture est repéré 13. L'entrée du corps de vanne 10 par laquelle le gaz d'admission entre dans le conduit interne est repérée 17 tandis que la sortie du corps de vanne 10 par laquelle le gaz d'admission sort hors du conduit interne est repérée 18.

Outre l'unité de détection 12, le dispositif de détection de gaz et de vapeurs inflammables comprend des moyens de test pour vérifier le fonctionnement de l'unité de détection 12.

Les moyens de test comprenant au moins un réservoir 15 configuré pour contenir une quantité de gaz test de la même nature que le gaz inflammable prédéterminé ou que la vapeur inflammable prédéterminée dont l'unité de détection 12 est configurée pour déterminer la concentration.

Les moyens de test comprennent aussi au moins un élément de libération du gaz test contenu dans le réservoir 15 vers une zone déterminée située en regard de l'unité de détection 12.

Les moyens de test comprennent également une unité de commande provoquant la libération, par l'élément de libération, d'une quantité prédéterminée 16 de gaz test dans la zone déterminée et procédant à une mesure de la concentration en gaz test détecté par l'unité de détection 12 dans la zone déterminée.

De manière générale, le dispositif de détection de gaz et de vapeurs inflammables peut reprendre les enseignements de la demande de brevet EP-A1-2776827 déposée au nom de la Demanderesse et aux enseignements duquel l'homme du métier pourra se référer.

En particulier, l'unité de détection 12 peut par exemple consister en un Pellistor. De manière plus générale, l'unité de détection 12 consiste en un capteur de gaz ou une cellule fonctionnant selon un mode quelconque existant et suffisamment connu de l'Homme du Métier sans qu'il ne soit nécessaire de le détailler plus en détails ici.

Selon un mode de réalisation particulier, le dispositif de détection est complètement intégré dans le corps de vanne 10, selon une architecture et une disposition qui en épousent les contours.

Avantageusement, de manière non représentée, l'unité de détection 12 et les moyens de test peuvent être regroupés dans un boitier rapporté dans un logement correspondant du corps de vanne 10. Préférentiellement, le boitier peut présenter un volume compris dans une plage allant de 10 à 200 cm³, de préférence entre 25 et 175 cm³, encore plus préférentiellement entre 75 et 125 cm³.

Le réservoir 15 peut consister en tout container étanche, réalisé en matériau étanche, équipé d'un premier orifice pour la libération du gaz test hors du réservoir et éventuellement d'un deuxième orifice pour recharger le réservoir 15 en gaz test.

L'élément de libération, qui peut notamment être agencé de sorte à obturer ou ouvrir le premier orifice mentionné au paragraphe précédent, peut par exemple comprendre un électroaimant ou une électrovanne. Dans le cas où il s'agit d'une électrovanne, celle-ci est agencée pour obstruer le premier orifice du container lorsqu'elle est en position fermée. A l'ouverture de l'électrovanne, la quantité prédéterminée 16 de gaz test est libérée (Figure 3) dans la zone déterminée qui se situe en regard de l'unité de détection 12.

Selon un mode de réalisation particulier, les moyens de test comprennent au moins un premier moyen d'alimentation de l'unité de commande et/ou au moins un deuxième moyen d'alimentation des éléments de libération du gaz test dans la zone déterminée. Le premier moyen d'alimentation peut être intégré dans le dispositif de détection ou être extérieur à celui-ci et éventuellement extérieur au corps de vanne 10. De la même manière, le deuxième moyen d'alimentation peut être intégré dans le dispositif de détection ou être extérieur à celui-ci et éventuellement extérieur au corps de vanne 10. Chacun des premier et deuxième moyens d'alimentation peut comprendre une batterie ou une pile. Dans une variante particulière non limitative, le premier moyen d'alimentation et le deuxième moyen d'alimentation consistent un moyen unique d'alimentation qui peut consister en une batterie ou en une pile. Alternativement, il peut être prévu une alimentation extérieure, notamment à courant continu, typiquement de 12V ou 24V.

L'unité de détection 12 est agencée de sorte que durant la période où le gaz d'admission circule dans le conduit interne de l'entrée 17 vers la sortie 18 du corps de vanne 10 au moment où l'on souhaite alimenter le moteur thermique en gaz d'admission, l'unité de détection 12 est en communication fluidique, notamment en permanence et de manière obligatoire, avec le flux F2 de gaz d'admission circulant à travers le conduit interne de l'entrée 17 vers la sortie 18 du corps de vanne 10.

Le module de commande pilote l'actionneur 13 de sorte à placer l'élément d'obturation 11 dans la configuration de fermeture dès que la mesure réalisée par l'unité de détection 12 est représentative d'une concentration en gaz inflammable ou vapeur inflammable prédéterminé dans le conduit interne ayant une valeur supérieure ou égale à un seuil prédéterminé enregistré dans une mémoire du module de commande. La fermeture qui en résulte de l'élément d'obturation 11 permet d'interrompre la circulation de gaz d'admission dans le conduit interne et d'éviter qu'un gaz d'admission caractérisé par une concentration supérieure à ce seuil prédéterminé ne pénètre dans le moteur thermique.

Le système de fermeture peut comprendre un capteur de fermeture typiquement solidaire du corps de vanne 10, apte à déterminer la configuration de fermeture de l'élément d'obturation 11 et communiquant au module de commande une information représentative du fait que la configuration de fermeture est établie ou non établie. Alternativement ou en combinaison, le système de fermeture peut comprendre un capteur d'ouverture typiquement solidaire du corps de vanne 10, apte à déterminer la configuration d'ouverture de l'élément d'obturation 11 et communiquant au module de commande une information représentative du fait que la configuration d'ouverture est établie ou non établie.

De manière préférée, le module de commande et/ou l'unité de commande peut consister en une carte électronique. Une telle carte électronique peut comporter des moyens de communication sans fil de nature quelconque (par exemple selon une technologie WIFI, Bluetooth, NFC (pour « Near Field Communication » en terminologie anglo-saxonne), radiofréquence RFID, ZigBee, etc...).

Dans un mode de réalisation de l'invention, l'unité de commande et/ou le module de commande est destiné à interagir avec une unité de contrôle extérieure au système de fermeture, par exemple sous la forme d'une tablette tactile, par l'intermédiaire des moyens de communication sans fil évoqués ci-dessus.

L'unité de contrôle traite les informations recueillies depuis l'unité de commande et/ou depuis le module de commande et sert éventuellement d'interface homme-machine afin de piloter à distance l'unité de commande et/ou le module de commande, par exemple en vue d'un pilotage de l'actionneur 13 et/ou d'un pilotage de l'élément de libération.

Dans un mode de réalisation de l'invention, l'élément de libération est connecté à un processeur de l'unité de contrôle par une interface sans fil.

Dans un mode de réalisation de l'invention, l'unité de détection 12 envoie un signal au processeur de l'unité de contrôle par une interface sans fil.

La présente invention concerne aussi un procédé de test du système de fermeture décrit précédemment, comprenant la mise en oeuvre d'un cycle de test incluant :
- une phase (Figures 1 à 4) de test du dispositif de détection de gaz et de vapeurs inflammables durant laquelle il est déterminé si le dispositif de détection de gaz et de vapeurs inflammables est dans un état de fonctionnement ou dans un état de défaillance,
- et une phase de test du fonctionnement de l'élément d'obturation 11 durant laquelle le module de commande pilote l'actionneur 13 de sorte à déplacer l'élément d'obturation 11 vers au moins une configuration test correspondant soit à la configuration de fermeture (notamment dans le cas où le système de fermeture est configuré de sorte que l'élément d'obturation 11 occupe naturellement la configuration d'ouverture lorsque l'actionneur 13 n'est pas sollicité), soit à la configuration d'ouverture (notamment dans le cas où le système de fermeture est configuré de sorte que l'élément d'obturation 11 occupe naturellement la configuration de fermeture lorsque l'actionneur 13 n'est pas sollicité), et durant laquelle il est déterminé que l'élément d'obturation 11 est dans un état opérationnel s'il est déterminé que la configuration test est occupée ou dans un état de défaillance s'il est déterminé que la configuration test n'est pas occupée.

Sur les Figures 1 à 4, seule la phase de test du dispositif de détection de gaz et de vapeurs inflammables est représentée.

Selon un mode d'exécution envisagé en aucun cas limitatif, la phase de test du fonctionnement de l'élément d'obturation 11 (non représentée) est mise en oeuvre après la phase de test du dispositif de détection de gaz et de vapeurs inflammables si, durant la phase de test du dispositif de détection de gaz et de vapeurs inflammables, il est déterminé que le dispositif de détection de gaz et de vapeurs inflammables est dans son état de fonctionnement.

Toutefois, il reste tout à fait envisageable que la phase de test du fonctionnement de l'élément d'obturation soit mise en oeuvre avant ou pendant la phase de test du dispositif de détection de gaz ou de vapeurs inflammables.

Selon un mode de réalisation particulier de l'invention, la phase de test du dispositif de détection de gaz et de vapeurs inflammables comprend :
- une étape (Figure 1) de fourniture du dispositif de détection de gaz et de vapeurs inflammables comprenant les moyens de test précédemment décrits pour vérifier le fonctionnement de l'unité de détection 12,
- une étape (Figure 2) de libération, par l'élément de libération, de la quantité prédéterminée 16 de gaz test hors du réservoir 15 vers la zone déterminée,
- une étape (Figure 3) de collecte, par l'unité de détection 12, de données de mesure de la concentration de gaz test dans la zone déterminée, notamment durant laquelle l'élément d'obturation 11 est maintenu en configuration de fermeture ; sur la Figure 3, l'unité de détection 12 est entourée de cercles concentriques afin de symboliser son action,
- une première étape de détermination, sur la base des données de mesure collectées, dans laquelle l'unité de commande vérifie si la concentration en gaz test dans la zone déterminée devient supérieure à un premier seuil de concentration connu de l'unité de commande,
- une deuxième étape de détermination ultérieure à la première étape de détermination, dans laquelle l'unité de commande vérifie, sur la base des données de mesure collectées, si la concentration en gaz test dans la zone déterminée devient inférieure à un deuxième seuil de concentration inférieur au premier seuil de concentration et connu de l'unité de commande,
- une étape (Figure 4) consistant à déterminer l'état de fonctionnement du dispositif de détection de gaz et de vapeurs inflammables s'il est vérifié que la concentration en gaz test devient supérieure premier seuil dans la première étape de détermination et s'il est vérifié que la concentration en gaz test devient ensuite inférieure au deuxième seuil dans la deuxième étape de détermination,
- une étape consistant à déterminer l'état de défaillance du dispositif de détection de gaz et de vapeurs inflammables sinon.

De manière avantageuse, on préchauffe l'unité de détection 12 jusqu'à ce qu'elle atteigne une température prédéterminée avant de mettre en oeuvre l'étape de libération.

Le temps de préchauffage de l'unité de détection 12 est variable selon différents paramètres, comme par exemple la température extérieure ambiante.

Le préchauffage de l'unité de détection 12 peut être commandé au moyen de l'unité de commande.

Si l'unité de détection 12 consiste en un Pellistor, au cours du préchauffage, la résistance électrique du Pellistor va notamment augmenter avec le temps au fur et à mesure de la montée en température. La résistance du Pellistor est avantageusement mesurée toutes les 250 millisecondes environ jusqu'à la stabilité de la courbe de la résistance électrique du Pellistor en fonction du temps. Cette phase de préchauffage est de l'ordre de 5 à 10 secondes, et permet de vérifier que le Pellistor chauffe correctement.

Il peut être prévu que les données analogiques du Pellistor soient envoyées par signal sans fil à partir de l'unité de commande jusqu'à l'unité de contrôle qui les traite ensuite numériquement.

Si la courbe de la résistance électrique ne se stabilise pas au terme d'une durée déterminée, de préférence d'environ 30 à 40 secondes, le dispositif de détection de gaz et de vapeurs inflammables est déclaré être dans son état de défaillance. Comme il le sera déduit du procédé de fonctionnement décrit en détails plus loin, dans le cas où l'état de défaillance est déterminé pour le dispositif de détection de gaz ou de vapeurs inflammables, le module de commande pilote l'actionneur 13 de sorte à obligatoirement placer l'élément d'obturation 11 dans la configuration de fermeture jusqu'à nouvel ordre.

Lorsque la stabilité de la courbe de la résistance électrique du Pellistor en fonction du temps est obtenue, l'unité de commande enregistre le niveau de celle-ci qui détermine le zéro (phase de calage) et provoque la libération de la quantité déterminée 16 de gaz test dans la zone déterminée.

Il est particulièrement avantageux de libérer le gaz test juste au moment où la courbe de la résistance électrique du Pellistor en fonction du temps devient stable, car il s'agit du moment où l'efficacité du Pellistor est maximale pour détecter le gaz test dans la zone déterminée.

Les molécules de gaz test sont immédiatement brûlées par le Pellistor du fait de la proximité et de la concentration maximales du gaz test dans la zone déterminée qui est en regard du Pellistor. La détection de gaz test est signalée à l'unité de contrôle par l'intermédiaire de l'unité de commande via les moyens de communication sans fil.

L'unité de contrôle à distance ou l'unité de commande intégrée analyse l'évolution dans le temps de la concentration en gaz test mesurée par l'unité de détection 12, et en particulier vérifie :
- que le premier seuil de concentration est franchi, ce qui indique que le « Pellistor » fonctionne correctement; le premier seuil de concentration correspond par exemple à 25% de la Limite Inférieure d'Explosivité du gaz test (par exemple de l'isobutane).
- puis que la concentration en gaz test retombe au-dessous du deuxième seuil de concentration, ce qui indique que l'atmosphère environnante est sûre ; le deuxième seuil de concentration correspond par exemple à 10% de la Limite Inférieure d'Explosivité du gaz test.

Si ces deux seuils sont franchis successivement, il est déterminé que le dispositif de détection de gaz et de vapeurs inflammables est dans son état de fonctionnement. A l'inverse, si ces deux seuils ne sont pas franchis correctement, alors il est déterminé que le dispositif de détection de gaz et de vapeurs inflammables est dans son état de défaillance et le module de commande pilote l'actionneur 13 de sorte à obligatoirement placer l'élément d'obturation 11 dans la configuration de fermeture jusqu'à nouvel ordre.

Dans le cas déjà décrit où le système de fermeture est tel que l'élément d'obturation 11 occupe naturellement la configuration de fermeture lorsque l'actionneur 13 n'est pas sollicité, la phase de test du fonctionnement de l'élément d'obturation 11 peut comprendre :
- une étape de pilotage de l'actionneur 13 par le module de commande pour tenter de provoquer un déplacement de l'élément d'obturation 11 par l'actionneur 13 vers la configuration test correspondant, dans ce cas, à la configuration d'ouverture,
- une étape de détermination dans laquelle le capteur d'ouverture détermine si la configuration d'ouverture est occupée par l'élément d'obturation 11 et communique au module de commande une information représentative du fait que la configuration d'ouverture est établie ou non établie,
- une étape consistant à déterminer l'état opérationnel de l'élément d'obturation 11 si le capteur d'ouverture vérifie que la configuration test est occupée par l'élément d'obturation 11,
- une étape consistant à déterminer l'état de défaillance de l'élément d'obturation 11 si le capteur d'ouverture détermine que la configuration test n'est pas occupée par l'élément d'obturation 11.

Alternativement, dans le cas déjà décrit où le système de fermeture est tel que l'élément d'obturation 11 occupe naturellement la configuration d'ouverture lorsque l'actionneur 13 n'est pas sollicité, la phase de test du fonctionnement de l'élément d'obturation 11 peut notamment comprendre :
- une étape de pilotage de l'actionneur 13 par le module de commande pour tenter de provoquer un déplacement de l'élément d'obturation 11 par l'actionneur 13 vers la configuration test correspondant, dans ce cas, à la configuration de fermeture,
- une étape de détermination dans laquelle le capteur de fermeture détermine si la configuration de fermeture est occupée par l'élément d'obturation 11 et communique au module de commande une information représentative du fait que la configuration de fermeture est établie ou non établie,
- une étape consistant à déterminer l'état opérationnel de l'élément d'obturation 11 si le capteur de fermeture vérifie que la configuration test est occupée par l'élément d'obturation 11,
- une étape consistant à déterminer l'état de défaillance de l'élément d'obturation 11 si le capteur de fermeture détermine que la configuration test n'est pas occupée par l'élément d'obturation 11.

Selon un mode d'exécution de l'invention, le cycle de test qui comprend la phase de test du dispositif de détection de gaz et de vapeurs inflammables et la phase de test du fonctionnement de l'élément d'obturation 11 est répété si, durant la phase de test du fonctionnement de l'élément d'obturation 11, il est déterminé que l'élément d'obturation 11 est dans l'état de défaillance.

Selon un mode d'exécution de l'invention, le procédé de test comprend la génération d'un signal d'alerte par le module de commande dans le cas où le nombre de fois où le cycle de test est exécuté sans succès atteint une valeur prédéterminée connue du module de commande.

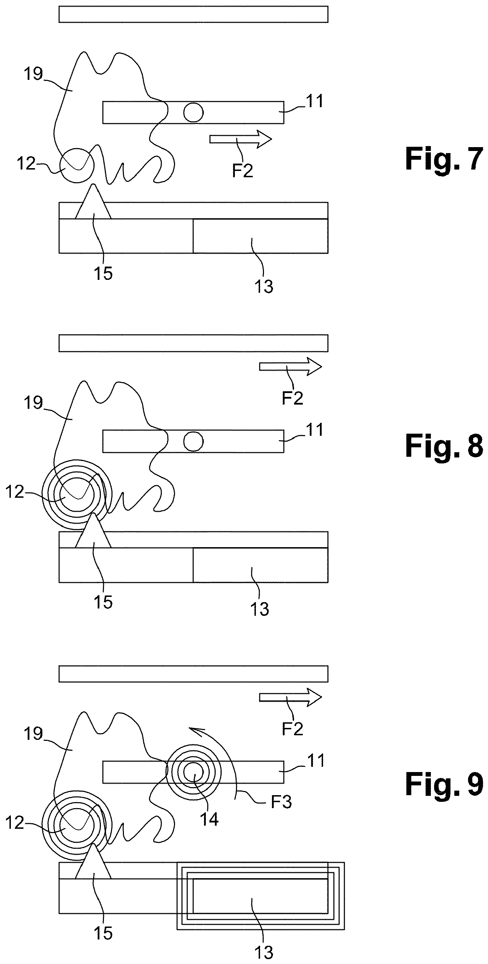

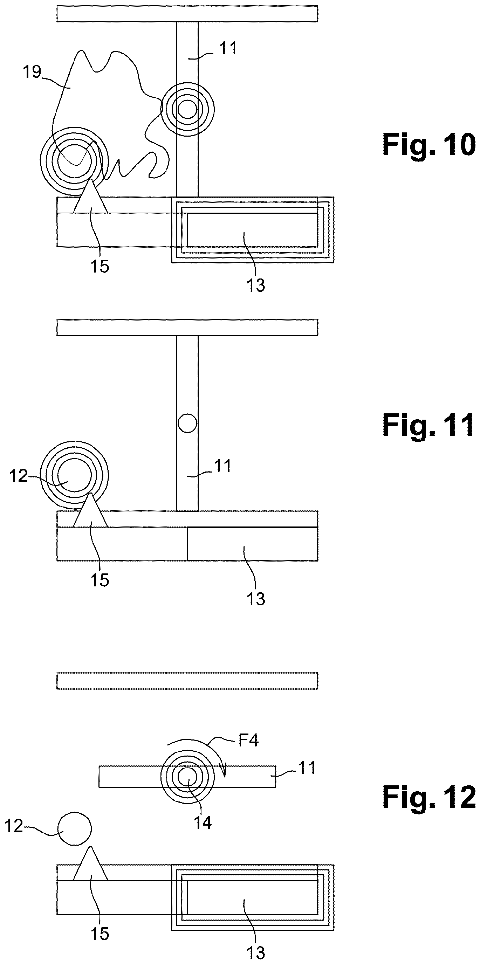

En référence aux Figures 5 à 12, la présente invention concerne aussi un procédé de fonctionnement du système de fermeture comprenant la mise en oeuvre des phases successives suivantes :
- phase de test du système de fermeture consistant à mettre en oeuvre le procédé de test décrit précédemment (Figures 1 à 4),
- phase de pilotage de l'actionneur 13 (Figure 5) par le module de commande pour placer l'élément d'obturation 11 dans la configuration d'ouverture (Figure 6), cette phase de pilotage étant mise en oeuvre si l'état de fonctionnement du dispositif de détection de gaz et de vapeurs inflammables est déterminé et si l'état opérationnel de l'élément d'obturation 11 est déterminé durant la phase de test, autorisant une circulation de gaz d'admission à travers le conduit interne du corps de vanne 10 du système de fermeture de l'entrée 17 vers la sortie 18 du corps de vanne 10 ; sur la Figure 5, l'actionneur 13 est entouré de rectangles concentriques afin de symboliser son actionnement, lequel a tendance à provoquer un pivotement F1 de l'élément d'obturation 11 autour de son axe 14 jusqu'à atteindre la configuration d'ouverture visible sur la Figure 6,
- phase de surveillance, par le module de commande, des données de mesure collectées à partir de l'unité de détection 12 pendant la circulation F2 des gaz d'admission à travers le conduit interne en allant de l'entrée 17 vers la sortie 18,
- phase de pilotage de l'actionneur 13 (Figure 9) par le module de commande de sorte à placer l'élément d'obturation 11 dans la configuration de fermeture (visible sur la Figure 10), cette étape de pilotage étant mise en oeuvre dès que les données de mesure collectées à partir de l'unité de détection 12 indiquent que la concentration en gaz inflammable ou vapeur inflammable prédéterminé dans le conduit interne est supérieure ou égale à un seuil prédéterminé enregistré dans une mémoire du module de commande; sur la Figure 9, l'actionneur 13 est entouré de rectangles concentriques afin de symboliser son actionnement, lequel a tendance à provoquer un pivotement F3 de l'élément d'obturation 11 autour de son axe 14 jusqu'à atteindre la configuration de fermeture visible sur la Figure 10.

La Figure 7 illustre la situation où, après la phase de pilotage de l'actionneur 13 pour placer l'élément d'obturation 11 dans la configuration d'ouverture et durant la phase de surveillance des données collectées à partir des mesures réalisées par l'unité de détection 12 pendant la circulation F2 du gaz d'admission à travers le conduit interne, le gaz d'admission présente au moins une certaine zone 19 dans le conduit interne où la concentration en gaz ou vapeur prédéterminé dont la concentration est surveillée par l'unité de détection 12 devient supérieure au seuil prédéterminé enregistré dans une mémoire du module de commande.

La Figure 8 montre que dans ce cas, l'unité de détection 12, durant la phase de surveillance, constate que la concentration en gaz ou vapeur prédéterminé dans le conduit interne durant la circulation F2 est supérieure ou égale au seuil prédéterminé enregistré dans la mémoire du module de commande, au moins dans la zone 19. Sur la Figure 8, l'unité de détection 12 est entourée de cercles concentriques afin de symboliser son actionnement durant la détection.

Sur la Figure 9, sous l'effet du pilotage par le module de commande, l'actionneur 13 est sollicité de sorte à placer l'élément d'obturation 11, via son pivotement F3, dans la configuration de fermeture représentée sur la Figue 10. Cela a pour effet d'interrompre la circulation F2 du gaz d'admission dans le circuit interne qui était préalablement établie en vue du fonctionnement du moteur thermique que le circuit d'admission alimente. Par manque de gaz d'admission, le moteur thermique s'arrête pour des raisons de sécurité.

Par la suite, il est prévu une phase d'acquittement du défaut avant d'autoriser la réouverture de l'élément d'obturation 11 : l'élément d'obturation 11 est verrouillé en configuration de fermeture tant que l'acquittement du défaut n'est pas effectué.

Après cet acquittement, dès que l'unité de détection 12 détermine (Figure 11) que la concentration en gaz ou vapeur prédéterminé dans le conduit interne est inférieure au seuil prédéterminé enregistré dans la mémoire du module de commande, l'actionneur 13 est sollicité (Figure 12) de sorte à placer à nouveau l'élément d'obturation 11 dans la configuration d'ouverture. Le procédé de fonctionnement retourne alors à la mise en oeuvre de la phase de surveillance. Sur la Figure 11, l'unité de détection 12 est entourée de cercles concentriques afin de symboliser son actionnement durant la détermination. Sur la Figure 12, l'actionneur 13 est entouré de rectangles concentriques afin de symboliser son actionnement, lequel a tendance à provoquer un pivotement F4 de l'élément d'obturation 11 autour de son axe 14 jusqu'à atteindre de nouveau la configuration d'ouverture visible sur la Figure 12, afin de permettre le rétablissement ultérieur de la circulation du gaz d'admission dans le circuit interne.

Bien entendu, l'invention n'est pas limitée aux modes de réalisation représentés et décrits ci-avant, mais en couvre au contraire toutes les variantes.

## Revendications

1. Système de fermeture pour circuit d'admission de gaz destiné à l'alimentation d'un moteur thermique en gaz d'admission, le système de fermeture comprenant un corps de vanne (10) délimitant un conduit interne permettant au gaz d'admission de circuler entre une entrée (17) et une sortie (18) du corps de vanne (10), un élément d'obturation (11) agencé le long du conduit interne et variant entre une configuration d'ouverture dans laquelle le gaz d'admission peut s'écouler dans le conduit interne de l'entrée (17) vers la sortie (18) du corps de vanne (10) et une configuration de fermeture bloquant la circulation de gaz d'admission dans le conduit interne, **caractérisé en ce que** le système de fermeture comprend :
- un actionneur (13) solidaire du corps de vanne (10) et assurant le déplacement de l'élément d'obturation (11) au moins vers l'une des configurations de fermeture et d'ouverture,
- un dispositif de détection de gaz et de vapeurs inflammables intégré au corps de vanne (10) et doté d'une unité de détection de gaz et de vapeurs (12) mesurant la concentration en au moins un gaz inflammable ou une vapeur inflammable prédéterminés dans le conduit interne,
- et un module de commande communiquant avec l'unité de détection (12) et avec l'actionneur (13) pour assurer un pilotage de l'actionneur (13) en fonction de la mesure réalisée par l'unité de détection (12).

2. Système de fermeture selon la revendication 1, **caractérisé en ce que** le dispositif de détection de gaz et de vapeurs inflammables comprend des moyens de test pour vérifier le fonctionnement de l'unité de détection (12), les moyens de test comprenant :
- au moins un réservoir (15) configuré pour contenir une quantité de gaz test de la même nature que ledit au moins un gaz inflammable ou vapeur inflammable prédéterminés,
- au moins un élément de libération du gaz test contenu dans le réservoir (15) vers une zone déterminée située en regard de l'unité de détection (12),
- et une unité de commande provoquant la libération, par l'élément de libération, d'une quantité prédéterminée de gaz test dans la zone déterminée et procédant à une mesure de la concentration en gaz test détecté par l'unité de détection (12) dans la zone déterminée.

3. Système de fermeture selon la revendication 2, **caractérisé en ce que** l'unité de détection (12) et les moyens de test sont regroupés dans un boitier rapporté dans un logement correspondant du corps de vanne (10).

4. Système de fermeture selon l'une des revendications 2 ou 3, **caractérisé en ce que** les moyens de test comprennent au moins un premier moyen d'alimentation de l'unité de commande et/ou au moins un deuxième moyen d'alimentation des éléments de libération du gaz test dans la zone déterminée.

5. Système de fermeture selon l'une des revendications 1 à 4, **caractérisé en ce que** l'unité de détection (12) est agencée de sorte à être en communication fluidique, notamment en permanence et de manière obligatoire, avec le flux de gaz d'admission circulant à travers le conduit interne de l'entrée (17) vers la sortie (18) du corps de vanne (10).

6. Système de fermeture selon l'une des revendications 1 à 5, **caractérisé en ce que** le module de commande pilote l'actionneur (13) de sorte à placer l'élément d'obturation (11) dans la configuration de fermeture dès que la mesure réalisée par l'unité de détection (12) est représentative d'une concentration en gaz inflammable ou en vapeur inflammable prédéterminés dans le conduit interne ayant une valeur supérieure ou égale à un seuil prédéterminé enregistré dans une mémoire du module de commande.

7. Système de fermeture selon l'une quelconque des revendications 1 à 6, **caractérisé en ce qu'**il comprend un capteur de fermeture permettant de déterminer la configuration de fermeture de l'élément d'obturation (11) et communiquant au module de commande une information représentative du fait que la configuration de fermeture est établie ou non établie et/ou un capteur d'ouverture permettant de déterminer la configuration d'ouverture de l'élément d'obturation (11) et communiquant au module de commande une information représentative du fait que la configuration d'ouverture est établie ou non établie.

8. Procédé de test d'un système de fermeture selon l'une quelconque des revendications précédentes, comprenant la mise en oeuvre d'un cycle de test incluant :
- une phase de test du dispositif de détection de gaz et de vapeurs inflammables durant laquelle il est déterminé si le dispositif de détection de gaz et de vapeurs inflammables est dans un état de fonctionnement ou dans un état de défaillance,
- et une phase de test du fonctionnement de l'élément d'obturation (11) durant laquelle le module de commande pilote l'actionneur (13) de sorte à déplacer l'élément d'obturation (11) vers au moins une configuration test correspondant à la configuration de fermeture ou la configuration d'ouverture et durant laquelle il est déterminé que l'élément d'obturation (11) est dans un état opérationnel s'il est déterminé que la configuration test est occupée ou dans un état de défaillance sinon.

9. Procédé de test selon la revendication 8, **caractérisé en ce que** la phase de test du dispositif de détection de gaz et de vapeurs inflammables comprend :
- une étape de fourniture d'un dispositif de détection de gaz et de vapeurs inflammables comprenant des moyens de test pour vérifier le fonctionnement de l'unité de détection (12), dans lequel les moyens de test comprennent au moins un réservoir (15) configuré pour contenir une quantité de gaz test de la même nature que ledit au moins un gaz inflammable ou vapeur inflammable prédéterminés, au moins un élément de libération du gaz test contenu dans le réservoir vers une zone déterminée située en regard de l'unité de détection (12), et une unité de commande provoquant la libération, par l'élément de libération, d'une quantité prédéterminée (16) de gaz test dans la zone déterminée et procédant à une mesure de la concentration en gaz test détecté par l'unité de détection (12) dans la zone déterminée,
- une étape de libération, par l'élément de libération, de la quantité prédéterminée (16) de gaz test hors du réservoir (15) vers la zone déterminée,
- une étape de collecte, par l'unité de détection (12), de données de mesure de la concentration de gaz test dans la zone déterminée,
- une première étape de détermination, sur la base des données de mesure collectées, dans laquelle l'unité de commande vérifie si la concentration en gaz test dans la zone déterminée devient supérieure à un premier seuil de concentration connu de l'unité de commande,
- une deuxième étape de détermination ultérieure à la première étape de détermination, dans laquelle l'unité de commande vérifie, sur la base des données de mesure collectées, si la concentration en gaz test dans la zone déterminée devient inférieure à un deuxième seuil de concentration inférieur au premier seuil de concentration et connu de l'unité de commande,
- une étape consistant à déterminer l'état de fonctionnement du dispositif de détection de gaz et de vapeurs inflammables s'il est vérifié que la concentration en gaz test devient supérieure premier seuil dans la première étape de détermination et s'il est vérifié que la concentration en gaz test devient inférieure au deuxième seuil dans la deuxième étape de détermination,
- une étape consistant à déterminer l'état de défaillance du dispositif de détection de gaz et de vapeurs inflammables sinon.

10. Procédé de test selon l'une quelconque des revendications 8 ou 9, **caractérisé en ce que** le système de fermeture étant tel que l'élément d'obturation (11) occupe naturellement la configuration de fermeture lorsque l'actionneur (13) n'est pas sollicité, la phase de test du fonctionnement de l'élément d'obturation (11) comprend :
- une étape de pilotage de l'actionneur (13) par le module de commande pour tenter de provoquer un déplacement de l'élément d'obturation (11) par l'actionneur (13) vers la configuration test correspondant à la configuration d'ouverture,
- une étape de détermination dans laquelle un capteur d'ouverture détermine si la configuration d'ouverture est occupée par l'élément d'obturation (11) et communique au module de commande une information représentative du fait que la configuration d'ouverture est établie ou non établie,
- une étape consistant à déterminer l'état opérationnel de l'élément d'obturation (11) si le capteur d'ouverture vérifie que la configuration test est occupée par l'élément d'obturation (11),
- une étape consistant à déterminer l'état de défaillance de l'élément d'obturation (11) si le capteur d'ouverture détermine que la configuration test n'est pas occupée par l'élément d'obturation (11).

11. Procédé de test selon l'une quelconque des revendications 8 ou 9, **caractérisé en ce que** le système de fermeture étant tel que l'élément d'obturation (11) occupe naturellement la configuration d'ouverture lorsque l'actionneur (13) n'est pas sollicité, la phase de test du fonctionnement de l'élément d'obturation (11) comprend :
- une étape de pilotage de l'actionneur (13) par le module de commande pour tenter de provoquer un déplacement de l'élément d'obturation (11) par l'actionneur (13) vers la configuration test correspondant à la configuration de fermeture,
- une étape de détermination dans laquelle un capteur de fermeture détermine si la configuration de fermeture est occupée par l'élément d'obturation (11) et communique au module de commande une information représentative du fait que la configuration de fermeture est établie ou non établie,
- une étape consistant à déterminer l'état opérationnel de l'élément d'obturation (11) si le capteur de fermeture vérifie que la configuration test est occupée par l'élément d'obturation (11),
- une étape consistant à déterminer l'état de défaillance de l'élément d'obturation (11) si le capteur de fermeture détermine que la configuration test n'est pas occupée par l'élément d'obturation (11).

12. Procédé de test selon l'une quelconque des revendications 10 ou 11, **caractérisé en ce que** le cycle de test est répété si, durant la phase de test du fonctionnement de l'élément d'obturation (11), il est déterminé que l'élément d'obturation (11) est dans l'état de défaillance.

13. Procédé de test selon la revendication 12, **caractérisé en ce qu'**il comprend la génération d'un signal d'alerte par le module de commande dans le cas où le nombre de fois où le cycle de test est exécuté sans succès atteint une valeur prédéterminée connue du module de commande.

14. Procédé de fonctionnement d'un système de fermeture selon l'une quelconque des revendications 1 à 7, comprenant la mise en oeuvre des phases successives suivantes :
- test du système de fermeture consistant à mettre en oeuvre le procédé de test selon l'une quelconque des revendications 8 à 13,
- pilotage de l'actionneur (13) par le module de commande pour placer l'élément d'obturation (11) dans la configuration d'ouverture afin d'autoriser une circulation de gaz d'admission à travers le conduit interne du corps de vanne (10) du système de fermeture de l'entrée (17) vers la sortie (18) du corps de vanne (10), cette phase étant mise en oeuvre si l'état de fonctionnement du dispositif de détection de gaz et de vapeurs inflammables est déterminé et si l'état opérationnel de l'élément d'obturation (11) est déterminé durant la phase de test, ,
- surveillance, par le module de commande, des données de mesure collectées à partir de l'unité de détection (12) pendant la circulation des gaz d'admission à travers le conduit interne,
- pilotage de l'actionneur (13) par le module de commande de sorte à placer l'élément d'obturation (11) dans la configuration de fermeture dès que les données de mesure collectées à partir de l'unité de détection (12) indiquent que la concentration en gaz ou vapeur prédéterminé dans le conduit interne est supérieure ou égale à un seuil prédéterminé enregistré dans une mémoire du module de commande.
